# EUROPEAN PATENT APPLICATION

(11) **EP 2 559 730 A1**
(43) Date of publication of application: **20.02.2013**
(21) Application number: 11768926.5
(22) Date of filing: 14.04.2011
(51) Int. Cl.: C08L 27/18, C08J 3/00, C08K 5/03, C08K 5/06, C08K 5/07

(54) **PROCESS FOR PRODUCING FLUORINE-CONTAINING COPOLYMER COMPOSITION AND FLUOROCARBON-RESIN MOLDED PRODUCT**

(30) Priority: 16.04.2010 JP 2010094734
(71) Applicant: Asahi Glass Company, Limited, Tokyo 100-8405 (JP)
(72) Inventor: IRUYA, Ken, Tokyo 100-8405 (JP); SATO, Takashi, Tokyo 100-8405 (JP)
(74) Representative: Müller-Boré & Partner Patentanwälte
(86) International application number: PCT/JP2011/059297
(87) International publication number: WO 2011/129405

(57) **Abstract**

To provide a process for producing an ethylene/tetrafluoroethylene copolymer composition which is excellent in mechanical properties of the molded product and which has good moldability. A process for producing a fluorinated copolymer composition, which comprises heating a mixture (D) comprising a high molecular weight fluorinated copolymer (A) having repeating units derived from tetrafluoroethylene and repeating units derived from ethylene and having a melt viscosity of from 1,500 to 35,000 Pa·s at a temperature higher by 15°C than the melting point, a fluorinated copolymer (B) having a molecular weight lower than the fluorinated copolymer (A), having repeating units derived from tetrafluoroethylene and repeating units derived from ethylene and having a melt viscosity of from 50 to 3,000 Pa·s at a temperature higher by 15°C than the melting point, said melt viscosity of the fluorinated copolymer (B) being at most 1/5 of the melt viscosity of the fluorinated copolymer (A) at a temperature higher by 15°C than the melting point of the fluorinated copolymer (A), and a solvent (C) capable of dissolving the fluorinated copolymer (A) and the fluorinated copolymer (B) at a temperature not higher than the melting points of the fluorinated copolymer (A) and the fluorinated copolymer of (B), to at least a temperature where the fluorinated copolymer (A) and the fluorinated copolymer (B) are dissolved in the solvent (C) to obtain a solution state; and removing the solvent (C).

## Description

### TECHNICAL FIELD

The present invention relates to a process for producing a fluorinated copolymer composition which has good mechanical properties and moldability.

### BACKGROUND ART

Ethylene/tetrafluoroethylene copolymer (hereinafter also referred to as "ETFE") is excellent in heat resistance, weather resistance, electrical insulation properties, non-tackiness, water/oil repellency, and so on, and in particular, it is characterized in that it has high moldability and mechanical strength among fluororesins. Thus, a broad range of molding processed products including pump casing, diaphragm casing, joints, packing, tubes, covered electric wires, sheets, films, lining, coating and filaments have been manufactured by a melt molding method such as injection molding, extrusion molding or blow molding. And, further broader range of use is demanded.

For such broader range of use, in a case where a high moldability is required, for example, in a case of carrying out injection molding or extrusion molding at a higher speed or in a case of processing into an extremely finely-shaped molded product, it is required to further increase the melt flowability of ETFE.

Further, for improvement in strength of molded products, dimensional stability, imparting electrical conductivity, electromagnetic wave shielding properties, improvement in surface properties, coloring, etc., it is desired to blend or add various types of fillers, pigments and additives, as the case requires, however, there has been a problem such that when a filler or the like is blended or added at a high ratio to conventional ETFE, the melt viscosity may become high, whereby the moldability may be deteriorated.

Further, also in a case where non-woven fabric, glass fiber, carbon fiber, aramid fiber, a fiber-like material of ceramics or an inorganic porous material is impregnated with ETFE to obtain a composite material such as tent sheet or a porous printed board, ETFE is required to have high melt flowability so that the inside of such fibers or the inside of pores can be easily and steadily impregnated.

Heretofore, there has been a problem such that when the molecular weight of ETFE is decreased in order to increase its melt flowability, the heat resistance and the mechanical strength of the obtained molded product are deteriorated. In particular, deterioration in tensile elongation of the ETFE molded product by decreasing the molecular weight is a major obstacle to the expansion in use of the molded product.

In this regard, a method is known, wherein a high molecular weight ETFE and a low molecular weight ETFE are melt mixed at 300°C by means of an extruder to decrease the melt viscosity and thereby to improve the moldability (Patent Document 1). By this method, however, melt kneading at high temperature may deteriorate ETFE. Further, the melt flowability of the actually obtained ETFE was about 4,200 to 4,500 Pa·s at 297°C, which was insufficient in the case where a higher melt flowability was required.

Further, when two ETFEs having extremely different viscosities are blended and subjected to continuous molding such as extrusion molding, melt fractures or hard spots may result at the surface due to the difference in viscosity, whereby a molded product having a surface in a poor state may be obtained. Further, during the extrusion into a fibrous form, troubles such as fiber breakage may occur.

### PRIOR ART DOCUMENT

### PATENT DOCUMENT

Patent Document 1: JP 2000-212365 A

### DISCLOSURE OF INVENTION

### TECHNICAL PROBLEM

The present invention is to provide a process for producing a fluorinated copolymer composition which is excellent in mechanical properties of the molded product obtained from the fluorinated copolymer composition and which has good moldability, which is desired to be developed on the above background.

### SOLUTION TO PROBLEM

The present invention provides the following process for producing a fluorinated copolymer composition.
[1] A process for producing a fluorinated copolymer composition, which comprises heating a mixture (D) comprising a high molecular weight fluorinated copolymer (A) having repeating units derived from tetrafluoroethylene and repeating units derived from ethylene and having a melt viscosity of from 1,500 to 35,000 Pa·s at a temperature higher by 15°C than the melting point, a fluorinated copolymer (B) having a molecular weight lower than the fluorinated copolymer (A), having repeating units derived from tetrafluoroethylene and repeating units derived from ethylene and having a melt viscosity of from 50 to 3,000 Pa·s at a temperature higher by 15°C than the melting point, said melt viscosity of the fluorinated copolymer (B) being at most 1/5 of the melt viscosity of the fluorinated copolymer (A) at a temperature higher by 15°C than the melting point of the fluorinated copolymer (A), and a solvent (C) capable of dissolving the fluorinated copolymer (A) and the fluorinated copolymer (B) at a temperature not higher than the melting points of the fluorinated copolymer (A) and the fluorinated copolymer (B), to at least a temperature where the fluorinated copolymer (A) and the fluorinated copolymer (B) are dissolved in the solvent (C) to obtain a solution state; and removing the solvent (C).
[2] The process for producing a fluorinated copolymer composition according to [1], wherein the content of the solvent (C) in the mixture (D) is at least an amount which is capable of dissolving the total amount of the fluorinated copolymer (A) and the fluorinated copolymer (B) in the mixture (D).
[3] The process for producing a fluorinated copolymer composition according to [1] or [2], wherein in the fluorinated copolymer (A), the molar ratio of (repeating units derived from tetrafluoroethylene)/(repeating units derived from ethylene) is from 80/20 to 30/70, and the total amount of the repeating units derived from tetrafluoroethylene and the repeating units derived from ethylene is more than 80 mol% based on the all repeating units in the fluorinated copolymer (A).
[4] The process for producing a fluorinated copolymer composition according to any one of [1] to [3], wherein in the fluorinated copolymer (B), the molar ratio of (repeating units derived from tetrafluoroethylene)/(repeating units derived from ethylene) is from 80/20 to 30/70, and the total amount of the repeating units derived from tetrafluoroethylene and the repeating units derived from ethylene is more than 80 mol% based on the all repeating units in the fluorinated copolymer (B).
[5] The process for producing a fluorinated copolymer composition according to any one of [1] to [4], wherein the solvent (C) is at least one member selected from the group consisting of a fluorinated aromatic compound, an aliphatic compound having at least one carbonyl group and a hydrofluoroalkyl ether.
[6] The process for producing a fluorinated copolymer composition according to any one of [1] to [5], wherein in the fluorinated copolymer composition, the mass ratio of fluorinated copolymer (A)/fluorinated copolymer (B) is from 1/1 to 1/15.
[7] The process for producing a fluorinated copolymer composition according to any one of [1] to [6], wherein the heating temperature of the mixture (D) is below the melting points of the fluorinated copolymer (A) and the fluorinated copolymer (B).
[8] The process for producing a fluorinated copolymer composition according to any one of [1] to [7], wherein the fluorinated copolymer (A), the fluorinated copolymer (B) and the solvent (C) are mixed to obtain the mixture (D), followed by dissolution at a temperature of from 40°C to 200°C.
[9] A fluororesin molded product obtained by molding the fluorinated copolymer composition produced by the production process as defined in any one of [1] to [8].
[10] The fluororesin molded product according to [9], which is a film.

### ADVANTAGEOUS EFFECTS OF INVENTION

According to the production process of the present invention, an ethylene/tetrafluoroethylene copolymer composition having good moldability and high mechanical properties can be obtained by mixing ethylene/tetrafluoroethylene copolymers having extremely different viscosities, which copolymers could not be uniformly mixed by conventional melt kneading.

### DESCRIPTION OF EMBODIMENTS

In this description, a mixture (D) means a mixture comprising a fluorinated copolymer (A), a fluorinated copolymer (B) and a solvent (C). The mixture (D) may be in an uniform state or in a non-uniform state. Further, the mixture (D) may be in a solid state, in a gel state, or in a solution state.

In this description, a composition means a mixture of a fluorinated copolymer (A) and a fluorinated copolymer (B).

### (Fluorinated copolymer (A))

The fluorinated copolymer (A) in the present invention is a high molecular weight fluorinated copolymer having repeating units derived from tetrafluoroethylene and repeating units derived from ethylene and having a melt viscosity of from 1,500 to 35,000 Pa·s at a temperature higher by 15°C than the melting point. The content ratio (molar ratio) of the repeating units derived from tetrafluoroethylene (hereinafter sometimes referred to as "TFE") to the repeating units derived from ethylene (hereinafter sometimes referred to as "E") is preferably from 80/20 to 30/70, more preferably form 75/25 to 35/65, most preferably from 65/35 to 40/60.

If the molar ratio of (repeating units derived from TFE)/(repeating units derived from E) is extremely large, the mechanical strength, melt-moldability, etc. of the ETFE may deteriorate. On the other hand, if the above molar ratio is extremely small, the heat resistance, weather resistance, chemical resistance, resistance to chemical permeability, etc. may deteriorate. When the molar ratio is within the above range, the above ETFE is excellent in heat resistance, weather resistance, chemical resistance, resistance to chemical permeability, mechanical strength, melt-moldability, etc.

Further, the fluorinated copolymer (A) may contain, in addition to the repeating units derived from TFE and the repeating units derived from E, repeating units derived from one or more types of other monomers as long as its essential properties will not be impaired.

Such another monomer may, for example, be an α-olefin such as propylene or butene; a compound represented by CH₂=CX(CF₂)ₙY (wherein each of X and Y which are independent of each other, is a hydrogen atom or a fluorine atom, and n is an integer of from 2 to 8); a fluoroolefin having a hydrogen atom in an unsaturated group such as vinylidene fluoride (VDF), vinyl fluoride (VF), trifluoroethylene or hexafluoroisobutylene (HFIB); or a fluoroolefin having no hydrogen atom in an unsaturated group (except for TFE) such as hexafluoropropylene (HFP), chlorotrifluoroethylene (CTFE), perfluoro(methyl vinyl ether) (PMVE), perfluoro(ethyl vinyl ether) (PEVE), perfluoro(propyl vinyl ether) (PPVE), perfluoro(butyl vinyl ether) (PBVE) or another perfluoro(alkyl vinyl ether) (PAVE). One or more types of such other monomers may be employed.

As such another monomer, the compound represented by the above general formula CH₂=CX(CF₂)ₙY (hereinafter referred to as "FAE") is preferably used. As described above, FAE is a compound represented by a general formula CH₂=CX(CF₂)ₙY (wherein X and Y which are independent of each other, is a hydrogen atom or a fluorine atom, and n is an integer of from 2 to 8). If n in the formula is less than 2, the properties of ETFE may be insufficient (for example, stress cracks of a ETFE molded product may be formed). On the other hand, if n in the formula is more than 8, the polymerization reactivity may deteriorate.

FAE may, for example, be CH₂=CF(CF₂)₂F CH₂=CF(CF₂)₃F, CH₂=CF(CF₂)₄F, CH₂=CF(CF₂)₅F, CH₂=CF(CF₂)₈F, CH₂=CF(CF₂)₂H, CH₂=CF(CF₂)₃H, CH₂=CF(CF₂)₄H, CH₂=CF(CF₂)₅H, CH₂=CF(CF₂)₈H, CH₂=CH(CF₂)₂F, CH₂=CH(CF₂)₃F, CH₂=CH(CF₂)₄F, CH₂=CH(CF₂)₅F, CH₂=CH(CF₂)₈F, CH₂=CH(CF₂)₂H, CH₂=CH(CF₂)₃H, CH₂=CH(CF₂)₄H, CH₂=CH(CF₂)₅H or CH₂=CH(CF₂)₈H. One or more types of FAE may be employed.

Among them, the compound represented by CH₂=CH(CF₂)ₙY is more preferred n in the formula is more preferably from 2 to 6 since its molded product will be excellent in stress crack resistance, and n is most preferably from 2 to 4.

In the fluorinated copolymer (A), the content of repeating units derived from such another monomer is preferably from 0.01 to 20 mol%, more preferably from 0.1 to 15 mol%, most preferably from 1 to 10 mol%, based on the total repeating units in the fluorinated copolymer (A). If the content of the repeating units derived from such another monomer is below the range of from 0.01 to 20 mol%, the stress crack resistance of the molded product formed from the fluorinated copolymer composition will be reduced, and there may be a case where a fracture phenomenon such as cracking is likely to occur under a stress. If it exceeds the range of from 0.01 to 20 mol%, the mechanical strength of the composition may be reduced.

The fluorinated copolymer (A) has a melt viscosity of from 1,500 to 35,000 Pa·s, preferably from 1,500 to 32,000 Pa·s, more preferably from 1,500 to 30,000 Pa·s, at a temperature higher by 15°C than the melting point. When such a melt viscosity is within a range of from 1,500 to 35,000 Pa·s, a fluorinated copolymer having a high mechanical strength may be obtained.

The melting point of the fluorinated copolymer (A) in the present invention is preferably from 120 to 280°C, more preferably from 150 to 270°C, most preferably from 160 to 265°C.

### (Fluorinated copolymer (B))

The fluorinated copolymer (B) in the present invention is a fluorinated copolymer having a molecular weight lower than the fluorinated copolymer (A), having a melt viscosity of from 50 to 3,000 Pa·s at a temperature higher by 15°C than the melting point, and having repeating units derived from TFE and repeating units derived from E. The content ratio (molar ratio) of the repeating units derived from TFE to the repeating units derived from E is preferably from 80/20 to 30/70, more preferably from 75/25 to 35/65, most preferably from 65/35 to 40/60.

If the molar ratio of (repeating units derived from TFE)/(repeating units derived from E) is extremely large, the mechanical strength and melt-moldability of the ETFE may be deteriorated. On the other, if the above molar ratio is extremely small, the heat resistance, weather resistance, chemical resistance, resistance to chemical permeability, etc. may be deteriorated. When the molar ratio is within the above range, the ETFE is excellent in heat resistance, weather resistance, chemical resistance, resistance to chemical permeability, mechanical strength, melt-moldability, etc.

Further, the fluorinated copolymer (B) may contain, in addition to the repeating units derived from TFE and the repeating units derived from E, repeating units derived from one or more types of other monomers as long as the essential properties will not be impaired.

As such another monomer, the same monomer as the above monomer for the fluorinated copolymer (A) may be used. Preferred such another monomer is also the same as the preferred another monomer for the fluorinated copolymer (A). Further, in the fluorinated copolymer (B), the content of the repeating units derived from such another monomer is preferably from 0.01 to 20 mol%, more preferably from 0.1 to 15 mol%, most preferably from 1 to 10 mol%, based on the total repeating units in the fluorinated copolymer (B). If the content of the repeating units derived from such another monomer is below the range of from 0.01 to 20 mol%, the stress crack resistance of the composition may be deteriorated. If it exceeds the range of from 0.01 to 20 mol%, the heat resistance of the composition may be deteriorated.

The fluorinated copolymer (B) has a melt viscosity of from 50 to 3,000 Pa·s, preferably from 60 to 2,800 Pa·s, more preferably from 70 to 2,700 Pa·s, at a temperature higher by 15°C than the melting point. When such a melt viscosity is within a range of from 50 to 3,000 Pa·s, the flowability is high, and the moldability is good.

It is a characteristic of the production process of the present invention that even when the difference in melt viscosity between the fluorinated copolymer (A) and the fluorinated copolymer (B) is large, a uniform mixed composition may be obtained.

The melt viscosity of the fluorinated copolymer (B) is at most 1/5 of the melt viscosity of the fluorinated copolymer (A) at a temperature higher by 15°C than the melting point of the fluorinated copolymer (A). Such a melt viscosity may be at most 1/8, further at most 1/10, in which case a uniform mixed composition may be obtained. The melting point of the fluorinated copolymer (B) in the present invention is preferably from 120 to 280°C, more preferably from 150 to 270°C, most preferably from 160 to 265°C.

### (Measurement of melt viscosity)

The melt viscosity (melt flowability) of the fluorinated copolymer (A) and the fluorinated copolymer (B) in the present invention is preferably measured by means of a capillary flowability measuring apparatus (capillary rheometer). By using this apparatus, a molten resin is extruded at a constant rate through a capillary, and the stress required for the extrusion is measured, whereby the melt viscosity is determined. When the molecular weight of the fluorinated copolymer is low, the melt viscosity of the fluorinated copolymer is also low, and when the molecular weight of the fluorinated copolymer is high, the melt viscosity is also high.

The melt flowability of the fluorinated copolymer in the present invention is measured by using a melt flowability measuring apparatus "CAPILOGRAPH" manufactured by Toyo Seiki Seisaku-sho, Ltd. having set an orifice having a diameter of 1 mm and a length of 10 mm under conditions of cylinder temperature of 240°C and a piston speed of 10 mm/min., as described in Examples.

The temperature at which the fluorinated copolymer is melted is preferably a temperature higher by 5 to 30°C than the melting point of the fluorinated copolymer. If the measurement is carried out at a temperature lower than the above temperature, the fluorinated copolymer will not be sufficiently melted, and the measurement is likely to be difficult. If the measurement is carried out at a temperature substantially higher than the above temperature, in a case of a fluorinated copolymer having a high flowability, the viscosity is too low and the molten fluorinated copolymer becomes likely to flow out from the orifice in a short time, and the measurement will be difficult. In the present invention, the viscosity measured at a temperature higher by 15°C than the melting point is taken as the melt viscosity.

### (Measurement of melting point)

Each melting point of the fluorinated copolymer (A) and the fluorinated copolymer (B) in the present invention is determined from an endothermic peak at the time of heating from room temperature to 300°C at 10°C/min. under an air atmosphere by using a differential scanning calorimeter (DSC220CU, manufactured by Seiko Instruments Inc.), as described in Examples below.

### (Method for preparing fluorinated copolymer (A) and fluorinated copolymer (B))

The method for preparing the fluorinated copolymer (A) and the fluorinated copolymer (B) in the present invention may be (1) a method of adjusting the molecular weight at the time of polymerization, (2) a method of applying energy such as heat or radiation to a fluorinated copolymer obtained by polymerization to breakdown the molecules and thereby to obtain a lower viscosity, or (3) a method of chemically breaking a molecular chain of a fluorinated copolymer obtained by polymerization by a radical, specifically, a method wherein a fluorinated copolymer and an organic peroxide are melted and kneaded by means of an extruder, and molecular chains of the fluorinated copolymer are broken by generated radicals to obtain a lower viscosity. In principle, any of the above methods may be applied. However, in the case of the above (2) to (3), there is a problem such that an active functional group such as carbonyl group may be generated at a breakage site in the fluorinated copolymer, and undesirable adhesion, etc. is likely to occur. On the other hand, the method (1) is more preferred since an active functional group is less likely to be generated in the obtained fluorinated copolymer, and the productivity is high.

The polymerization method for preparing the fluorinated copolymer (A) and the fluorinated copolymer (B) in the present invention is not particularly limited, and it is possible to employ a method wherein TFE and E are charged in a reactor, and they are copolymerized by using a radical polymerization initiator and a chain transfer agent which are commonly used. The polymerization method may, for example, be, as known per se, bulk polymerization; solution polymerization using, as a polymerization medium, an organic solvent such as a fluorinated hydrocarbon, a chlorinated hydrocarbon, a fluorochlorinated hydrocarbon, an alcohol or a hydrocarbon; suspension polymerization using, as a polymerization medium, an aqueous medium and, as the case requires, a suitable organic solvent; or emulsion polymerization using, as a polymerization medium, an aqueous medium and an emulsifier. Most preferred is solution polymerization wherein TFE as a fluorinated monomer and E are copolymerized in the presence of a radical polymerization initiator, a chain transfer agent and a polymerization medium. Polymerization may be carried out in a batch system or continuous system operation by using a single vessel- or multi vessel-type stirring-type polymerization apparatus, a tubular polymerization apparatus or the like.

The radical polymerization initiator is preferably an initiator having a half-life of 10 hours at a temperature of from 0 to 100°C, more preferably at a temperature of from 20 to 90°C. It may, for example, be an azo compound such as azobisisobutyronitrile; a peroxydicarbonate such as diisopropyl peroxydicarbonate; a peroxyester such as tert-butyl peroxypivalate, tert-butyl peroxyisobutyrate or tert-butyl peroxyacetate; a non-fluorine type diacyl peroxide such as isobutyryl peroxide, octanoyl peroxide, benzoyl peroxide or lauroyl peroxide; a fluorine-containing diacyl peroxide such as (Z(CF₂)ₚCOO)₂ (wherein Z is a hydrogen atom, a fluorine atom or a chlorine atom, and p is an integer of from 1 to 10); or an inorganic peroxide such as potassium persulfate, sodium persulfate or ammonium persulfate.

The polymerization medium may, for example, be an organic solvent such as a fluorinated hydrocarbon, a chlorinated hydrocarbon, a fluorochlorinated hydrocarbon, an alcohol or a hydrocarbon, or an aqueous medium, as mentioned above.

The chain transfer agent may, for example, be an alcohol such as methanol or ethanol; a chlorofluorohydrocarbon such as 1,3-dichloro-1,1,2,2,3-pentafluoropropane or 1,1-dichloro-1-fluoroethane; or a hydrocarbon such as pentane, hexane or cyclohexane. The amount of the chain transfer agent is usually from 0.01 to 100 mass% based on the polymerization medium. By adjusting the concentration of the chain transfer agent, it is possible to control the melt viscosity (molecular weight) of the fluorinated copolymer to be obtained. That is, as the concentration of the chain transfer agent is higher, a fluorinated copolymer having a lower molecular weight may be obtained.

Particularly when the fluorinated copolymer (B) having a low molecular weight in the present invention is prepared, usually it is also preferred to use, as the chain transfer agent, 1,3-dichloro-1,1,2,2,3-pentafluoropropane as the polymerization medium.

The polymerization conditions are not particularly limited, but the polymerization temperature is usually preferably from 0 to100°C, more preferably from 20 to 90°C.

The polymerization pressure is preferably from 0.1 to 10 MPa, more preferably from 0.5 to 3 MPa. As the polymerization pressure is higher within the above range, the polymer to be obtained tends to have a higher molecular weight and a higher melt viscosity, and therefore it is possible to control the melt viscosity of the fluorinated copolymer to be prepared by adjusting the polymerization pressure.

The polymerization time may be determined depending upon the polymerization temperature, the polymerization pressure, etc., and it is usually preferably from 1 to 30 hours, more preferably from 2 to 10 hours.

The concentration of the fluorinated copolymer in the polymerization medium at the end of the polymerization reaction is usually about from 0.03 to 0.2 g/cm³. The molecular weight of the fluorinated copolymer can be controlled by adjusting such a concentration. That is, as the concentration of the fluorinated copolymer at the time of polymerization is lower, a fluorinated copolymer having a lower molecular weight may be obtained.

### (Process for producing fluorinated copolymer composition)

The fluorinated copolymer composition of the present invention is produced by heating the mixture (D) comprising the fluorinated copolymer (A), the fluorinated copolymer (B) and the solvent (C) capable of dissolving the fluorinated copolymer (A) and the fluorinated copolymer (B) at a temperature not higher than the melting points of the fluorinated copolymer (A) and the fluorinated copolymer (B), to at least a temperature where the fluorinated copolymer (A) and the fluorinated copolymer (B) are dissolved in the solvent (C), and then removing the solvent (C).

Generally, in a conventional melt kneading method, when the fluorinated copolymer (A) and the fluorinated copolymer (B) are mixed, if the viscosities of the both fluorinated copolymers are extremely different from each other, the fluorinated copolymer (B) first starts to melt, and thus the fluorinated copolymer (A) having a high molecular weight becomes present in the liquid of the fluorinated copolymer (B) having a low viscosity, whereby it becomes difficult to efficiently apply a shear stress to the fluorinated copolymer (A). Thus, kneading may end without sufficient melting of the fluorinated copolymer (A), and a non-uniform fluorinated copolymer composition is likely to be obtained.

If continuous molding of such a composition is carried out, a part of the fluorinated copolymer (A) may be insufficiently melted and remain as hard spots, or troubles in the flowability such as melt fractures may occur. In a case of forming into a fibrous form, since the composition is non-uniform, the melt elongation and melt tension do not become constant, and troubles such as breakage of fibers may occur.

Further, it was difficult to uniformly mix a fluorinated copolymer (A) having an extremely high molecular weight and a fluorinated copolymer (B) having a low molecular weight by means of melt kneading because the difference in melt viscosity between the both fluorinated copolymers is large.

In the present invention, first, the fluorinated copolymer (A) and the fluorinated copolymer (B) are mixed into the solvent (C) to obtain the mixture (D). For the mixing, a batch-type kneading apparatus, a pressure vessel provided with a stirring apparatus or the like is used. Then, under ordinary or increased pressure, the fluorinated copolymer (A) and the fluorinated copolymer (B) are dissolved at a temperature not higher than the melting points of the fluorinated copolymer (A) and the fluorinated copolymer (B). Further, mixing and dissolution may be carried out at the same time.

As the solvent (C) is present, the fluorinated copolymer (A) having a high molecular weight and the fluorinated copolymer (B) having a molecular weight lower than the fluorinated copolymer (A) can be dissolved at the same time, whereby mixing in a state of low viscosity, which cannot be accomplished by melt kneading without the solvent (C), becomes possible, and the polymers becomes highly entwined, and a fluorinated composition having a good melt moldability even after removal of the solvent (C) may be obtained. Even in a case of a fluorinated copolymer (A) having an extremely high molecular weight, it is dissolved in the solvent (C), whereby it can be mixed with the fluorinated copolymer (B) having a low molecular weight.

The mass ratio of fluorinated copolymer (A)/fluorinated copolymer (B) is preferably from 1/1 to 1/15, more preferably from 1/1 to 1/14, furthermore preferably from 1/1 to 1/12, most preferably from 1/1 to 1/10. When it is within the range of from 1/1 to 1/15, it is possible to obtain a fluorinated composition having high mechanical properties and a good flowability.

For dissolution of the fluorinated copolymer (A) and the fluorinated copolymer (B) in the solvent (C), a stirring apparatus which is usually used for preparing various types of solution may be used without particular limitation. In order to dissolve the fluorinated copolymers and obtain a uniform solution in a shorter time, it is necessary to stir the solvent (C), the fluorinated copolymer (A) and the fluorinated copolymer (B) well.

As such stirring apparatus, specifically, a batch type kneading apparatus such as a homomixer, a Henschel mixer, a Banbury mixer or a pressure kneader, e.g. a pressure vessel provided with a stirring apparatus, or an apparatus having both functions of kneading and extruding such as an extruder or kneader, may be mentioned. In the case of dissolution under increased pressure, the above pressure vessel provided with a stirring apparatus, i.e., for example, an apparatus such as autoclave provided with a stirrer is used. As the shape of a stirring blade, a marine propeller blade, a paddle blade, an anchor blade, a turbine blade or the like may be used.

The dissolution temperature is preferably not lower than the temperature at which the fluorinated copolymer (A) and the fluorinated copolymer (B) are dissolved in the solvent (C), more preferably not higher than a temperature higher by 10°C than the phase separation temperature of the fluorinated copolymer (A), the fluorinated copolymer (B) and the solvent (C). Specifically, it is more preferably from 40 to 230°C, more preferably from 40°C to 200°C.

### (Solvent (C))

The solvent (C) in the present invention is a solvent capable of dissolving the fluorinated copolymer (A) and the fluorinated copolymer (B) at a temperature not higher than the melting points of the fluorinated copolymer (A) and the fluorinated copolymer (B) under ordinary pressure or increased pressure.

"Capable of dissolving ETFE at a temperature not higher than the melting points of the fluorinated copolymer (A) and the fluorinated copolymer (B)" does not mean that the fluorinated copolymer (A) and the fluorinated copolymer (B) can be dissolved at any temperature not higher than the melting points of the fluorinated copolymer (A) and the fluorinated copolymer (B), but it means that the fluorinated copolymer (A) and the fluorinated copolymer (B) can be dissolved at least within a temperature range not higher than the melting points of the fluorinated copolymer (A) and the fluorinated copolymer (B).

The solvent (C) is preferably at least one member selected from the group consisting of a fluorinated aromatic compound, an aliphatic compound having at least one carbonyl group and a hydrofluoroalkyl ether.

The solvent (C) may be one which is not capable of dissolving the fluorinated copolymer (A) and the fluorinated copolymer (B) at ordinary temperature. The solvent (C) is preferably a solvent which is capable of the fluorinated copolymer (A) and the fluorinated copolymer (B) at least by heating to a temperature below the melting points of the fluorinated copolymer (A) and the fluorinated copolymer (B) and by which a transparent and uniform solution of the fluorinated copolymer (A) and the fluorinated copolymer (B) may be obtained.

The solvent (C) is preferably a solvent which is capable of dissolving at least 0.1 mass% each of the fluorinated copolymer (A) and the fluorinated copolymer (B) at a temperature below the melting points of the fluorinated copolymer (A) and the fluorinated copolymer (B). The amount of each of the fluorinated copolymer (A) and the fluorinated copolymer (B) which the solvent (C) is capable of dissolve is more preferably at least 5 mass%, most preferably at least 10 mass%.

The melting point of the fluorinated aromatic compound capable of dissolving the fluorinated copolymer (A) and the fluorinated copolymer (B) is preferably at most 230°C, more preferably at most 200°C, further preferably at most 180°C. When the melting point is within such a range, the handling properties at the time of dissolution of the fluorinated copolymer (A) and the fluorinated copolymer (B) are excellent. Further, the fluorine content in the fluorinated aromatic compound ((atomic weight of fluorine × number of fluorine atoms in a molecule) × 1 00/molecular weight) is preferably from 5 to 75 mass%, more preferably from 9 to 75 mass%, most preferably from 12 to 75 mass%. When it is within such a range, the solubilities of the fluorinated copolymer (A) and the fluorinated copolymer (B) are excellent.

As specific examples of the fluorinated aromatic compound, a fluorinated benzonitrile, a fluorinated benzoic acid and its ester, a fluorinated polycyclic aromatic compound, a fluorinated nitrobenzene, a fluorinated phenylalkyl alcohol, a fluorinated phenol and its ester, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, a perfluorobenzene, a polyfluoroalkyl ester of benzoic acid, a polyfluoroalkyl ester of phthalic acid, and an aryl ester of trifluoromethane sulfonic acid may, for example, be mentioned. The fluorinated aromatic compound is preferably a fluorinated aromatic compound having at least two fluorine atoms. The fluorinated aromatic compound may be used alone or in combination as a mixture of two or more of them.

As more preferred examples of the fluorinated aromatic compound, pentafluorobenzonitrile, 2,3,4,5-tetrafluorobenzonitrile, 2,3,5,6-tetrafluorobenzonitrile, 2,4,5-trifluorobenzonitrile, 2,4,6-trifluorobenzonitrile, 3,4,5-trifluorobenzonitrile, 2,3-difluorobenzonitrile, 2,4-difluorobenzonitrile, 2,5-difluorobenzonitrile, 2,6-difluorobenzonitrile, 3,4-difluorobenzonitrile, 3,5-difluorobenzonitrile, 4-fluorobenzonitrile, 3,5-bis(trifluoromethyl)benzonitrile, 2-(trifluoromethyl)benzonitrile, 3-(trifluoromethyl)benzonitrile, 4-(trifluoromethyl)benzonitrile, 2-(trifluoromethoxy)benzonitrile, 3-(trifluoromethoxy)benzonitrile, 4-(trifluoromethoxy)benzonitrile, (3-cyanophenyl)sulfur pentafluoride, (4-cyanophenyl)sulfur pentafluoride,
pentafluorobenzoic acid, ethyl pentafluorobenzoate, methyl 2,4-difluorobenzoate, methyl 3-(trifluoromethyl)benzoate, methyl 4-(trifluoromethyl)benzoate, methyl 3,5-bis(trifluoromethyl)benzoate, perfluorobiphenyl, perfluoronaphthalene, pentafluoronitrobenzene, 2,4-difluoronitrobenzene, (3-nitrophenyl)sulfur pentafluoride, pentafluorobenzyl alcohol, 1-(pentafluorophenyl)ethanol, pentafluorophenyl acetate, pentafluorophenyl propionate, pentafluorophenyl butanoate, pentafluorophenyl pentanoate, pefluorobenzophenone, 2,3,4,5,6-pentafluorobenzophenone, 2',3',4',5',6'-pentafluoroacetophenone, 3',5'-bis(trifluoromethyl)acetophenone, 3'-(trifluoroethyl)acetophenone, 2,2,2-trifluoroacetophenone, pentafluoroanisole, 3,5-bis(trifluoromethyl)anisole,
decafluorodiphenyl ether, 4-bromo-2,2',3,3',4',5,5',6,6'-nonafluorodiphenyl ether, pentafluorophenylsulfonyl chloride, pentafluoropyridine, 3-cyano-2,5,6-trifluoropyridine, bis(pentafluorophenyl)carbonate, benzotrifluoride, 4-chlorobenzotrifluoride, 1,3-bis(trifluoromethyl)benzene, hexafluorobenzene, 2,2,2-trifluoroethyl benzoate, 2,2,3,3-tetrafluoropropyl benzoate, 2,2,3,3,3-pentafluoropropyl benzoate, 3,3,4,4,5,5,6,6,7,7,8,8,8-tridecafluorooctyl benzoate, bis(2,2,2-trifluoroethyl) phthalate, and 4-acetylphenyl trifluoromethane sulfonate may, for example, be mentioned.

The melting point of the aliphatic compound having at least one carbonyl group which is capable of dissolving the fluorinated copolymer (A) and the fluorinated copolymer (B) is preferably at most 220°C, more preferably at most 50°C, most preferably at most 20°C. Further, the boiling point of the aliphatic compound containing at least one carbonyl group is preferably the same as or higher than the temperature at which the fluorinated copolymer is dissolved.

However, in the present invention, in a case where dissolution of the fluorinated copolymer (A) and the fluorinated copolymer (B) is carried out under autogenous pressure or below, an aliphatic compound having at least one carbonyl group and having a boiling point of less than the dissolution temperature is also applicable. The "autogenous pressure" means a pressure which a mixture (D) of the solvent (C) and the fluorinated copolymer (A) and the fluorinated copolymer (B) spontaneously shows in a closed vessel.

In a case where an aliphatic compound containing at least one carbonyl group having a lower boiling point is used, the autogenous pressure tends to be high, and therefore from the viewpoints of safety and convenience, the boiling point of the aliphatic compound containing at least one carbonyl group is preferably at least room temperature, more preferably at least 50°C. Further, the upper limit of the boiling point of the aliphatic compound containing at least one carbonyl group is not particularly limited, but is preferably at most 220°C from the viewpoint of ease of drying in the drying step, etc.

The aliphatic compound containing at least one carbonyl group is preferably at least one member selected from the group consisting of a ketone such as a C₃₋₁₀ cyclic ketone or a chain ketone, an ester such as a chain ester or a monoether monoester of a glycol and a carbonate. The number of carbonyl group(s) is preferably 1 or 2.

The molecular structure of the aliphatic compound containing at least one carbonyl group is not particularly limited. For example, its carbon skeleton may be linear, branched or cyclic, and an etheric oxygen may be present between a carbon-carbon bond constituting its main chain or its side chain, and some of hydrogen atoms bonded to carbon atoms may be substituted by a halogen atom such as a fluorine atom. Among them, a cyclic ketone is more preferred as the above aliphatic compound containing at least one carbonyl group. They may be used alone or in combination as a mixture of two or more of them.

As specific and more preferred examples of the above-described aliphatic compound containing at least one carbonyl group in the present invention, the following compounds may be mentioned.

The above-described cyclic ketone may, for example, be cyclopentanone, cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cycloheptanone or isophorone.

The above-described chain ketone may, for example, be acetone, methyl ethyl ketone, 2-pentanone, methyl isopropyl ketone, 2-hexanone, methyl isobutyl ketone, 2-heptanone, 2-octanone, 2-nonanone, diisobutyl ketone or 2-decanone.

The above-described chain ester may, for example, be ethyl formate, isopentyl formate, methyl acetate, ethyl acetate, butyl acetate, isobutyl acetate, pentyl acetate, isopentyl acetate, hexyl acetate, cyclohexyl acetate, 2-ethylhexyl acetate, ethyl butyrate, butyl butyrate, pentyl butyrate, bis(2,2,2-trifluoroethyl)adipate, methyl cyclohexanecarboxylate, 2,2,2-trifluoroethyl cyclohexanecarboxylate or ethyl perfluoropentanoate.

The above-described monoether monoester of a glycol may, for example, be 2-methoxyethyl acetate, 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate.

The above-described carbonate may, for example, be bis(2,2,3,3-tetrafluoropropyl)carbonate, bis(2,2,2,-trifluoroethyl)carbonate, diethyl carbonate or propylene carbonate.

Specific example of the hydrofluoroalkyl ether which can dissolve the fluorinated copolymer (A) and the fluorinated copolymer (B) may, for example, be 1,1,1,2,3,3-hexafluoro-4-(1,1,2,3,3,3-hexafluoropropoxy)pentane, 1,1,1,2,2,3,4,5,5,5-decafluoro-3-methoxy-4-(trifluoroethyl)pentane. Among them, 1,1,1,2,3,3-hexafluoro-4-(1,1,2,3,3,3-hexafluoropropoxy)pentane is preferred.

The above-described solvents (C) which can dissolve the fluorinated copolymer (A) and the fluorinated copolymer (B) may be used alone or in combination as a mixture of two or more of them.

In the present application, a solvent which does not dissolve nor swell the fluorinated copolymer (A) and the fluorinated copolymer (B) up to the melting points of the fluorinated copolymer (A) and the fluorinated copolymer (B) or the boiling point of the solvent (C) is defined as a non-solvent. In the production process of the present invention, a non-solvent may be contained in the solution of the fluorinated copolymer (A) and the fluorinated copolymer (B) within a range not to impair the solubilities of the fluorinated copolymer (A) and the fluorinated copolymer (B).

The lower limit of the temperature to prepare a mixed solution of the fluorinated copolymers in this dissolution step is the phase separation temperature of the solution at a prescribed concentration. As explained below, at the phase separation temperature or lower, the mixture (D) comprising at least two types of compounds, i.e. the fluorinated copolymer (A) and the fluorinated copolymer (B) in this case, and the solvent (C) undergoes separation into two phases, and thus a state of a uniform solution may not be obtained.

That is, preparation of the solution is possible only at a temperature of the phase separation temperature or higher. Further, there is no problem even if the temperature of the fluorinated copolymer solution to be obtained is not lower than the melting points; however, in view of deterioration of the fluorinated copolymer (A), the fluorinated copolymer (B) or the solvent (C), or volatilization of the solvent (C), it is preferably not higher than the melting points of the fluorinated copolymers, more preferably a temperature not lower than the phase separation temperature of the mixed solution of the fluorinated copolymer (A) and the fluorinated copolymer (B).

The temperature at which the fluorinated copolymer (A) and the fluorinated copolymer (B) are dissolved in the solvent (C), i.e. the dissolution temperature depends upon the type of the solvent (C), the solution composition, etc. The dissolution temperature is preferably optimized by a phase diagram having plotted concentrations of the two-phase coexistence of the fluorinated copolymer (A) and the fluorinated copolymer (B), and the solvent (C), at various temperatures, wherein the temperature is on the ordinate and the ratio of the concentrations of the fluorinated copolymer (A) and the fluorinated copolymer (B), and the solvent (C) is on the abscissa. In the production process of the present invention, if the dissolution temperature is too high, the fluorinated copolymer (A) and the fluorinated copolymer (B) tend to be thermally deteriorated, and the solvent (C) may be volatilized or thermally deteriorated, which is not preferred. Further, if the dissolution temperature is below the phase separation temperature of the solution, the fluorinated copolymer (A) and the fluorinated copolymer (B) will not be dissolved in the solvent (C). The dissolution temperature is preferably a temperature higher by at least 5°C than the phase separation temperature of the solution to be prepared, more preferably a temperature higher by at least 10°C than the phase separation temperature. Further, the upper limit of the dissolution temperature is not particularly limited, but from the viewpoint of ease in forming porous particles, the volatility of the solvent (C), etc., it is preferably not higher than the melting points of the fluorinated copolymer (A) and the fluorinated copolymer (B) to be dissolved.

The separation temperature is also called a cloud point, and this is such a temperature that when a solution having a concentration is maintained at the temperature or higher, the solution becomes one-phase wherein the solute (the fluorinated copolymer (A) and the fluorinated copolymer (B) in the present invention) and the solvent are homogeneous while the temperature of the solution is below the cloud point, the solution undergoes phase separation.

In general, if the temperature of a solution of the fluorinated copolymer (A) and the fluorinated copolymer (B) is not higher than the phase separation temperature, the solution becomes separated into two phases, one of which contains the solvent (C) and is rich in the fluorinated copolymers, and the other contains the fluorinated copolymers and is rich in the solvent (C). Further, the temperature is not higher than the crystallization temperatures of the fluorinated copolymer (A) and the fluorinated copolymer (B) to be used, the fluorinated copolymer (A) and the fluorinated copolymer (B) are immobilized in a phase rich in the fluorinated copolymer (A) and the fluorinated copolymer (B), and a precursor of a porous body is formed. Thus, when a mixed solution containing fluorine is prepared, mixing is preferably carried out at a temperature not lower than the phase separation temperature. The content of the solvent i.e. the mass ratio of solvent (C)/(total amount of fluorinated copolymer (A) and fluorinated copolymer (B)) is preferably from 20/1 to 1/20, more preferably from 15/1 to 1/15, further preferably from 10/1 to 1/10.

### (Filler)

The fluorinated copolymer composition of the present invention may contain the following filler, pigment, etc. to provide various properties. For example, a fiber-reinforcing material such as carbon fiber, glass fiber or aramid fiber; a dimensional stabilizer such as glass beads; electroconductive or semiconductive filler such as carbon black, carbon nanotube, fluorinated CNT, stannic oxide, titanic acid black or titanic acid whisker; a transparent electroconductivity-imparting agent such as an ionized liquid; a surface modifier such as various whisker/potassium titanate, aluminum borate, carbon whisker or calcium carbonate whisker; a heat conductivity-imparting material such as graphite, magnesium oxide, a low melting point metal or a metal fiber; a sliding property-imparting material such as PTFE lubricant; an electromagnetic wave-shielding material such as ferrite or metal; a low gas permeable reinforcing material such as nano clay, fluorinated organic treated nano clay or talc; a weight reducing material such as glass balloons; a flexibility-imparting material such as various elastomers or fluorinated rubber; a high strength-imparting material such as nylon or aramid;
a coloring pigment such as titanium oxide, zinc oxide, carbon black, copper/chromium black, molybdate orange, iron oxide, chrome yellow, yellow iron oxide, titanium yellow, titanium/antimony/chrome yellow, chrome green, chrome oxide green or cobalt green; further, crystal nucleus agent, a crosslinking agent or crosslinking adjuvant such as triallyl isocyanurate, a blowing agent, a blowing nucleus material or a heat stabilizer; or
an additive such as copper, a copper compound (such as copper oxide or copper iodide), an antioxidant, a photostabilizer or an ultraviolet absorber, may be incorporated.

The fluorinated copolymer composition of the present invention employs the solvent (C) and thereby has an extremely low viscosity in a solution state, whereby it is possible to obtain a fluorinated copolymer composition having densely contained or filled with the above-described various e.g. particulate or fibrous fillers, pigments, etc. without impairing the moldability. Further, since the fluorinated copolymer composition has a high melt flowability, it is possible to easily impregnate materials such as non-woven fabric, glass fiber, aramid fiber, carbon fiber and a porous body made of ceramics with the fluorinated copolymer composition to the inner part.

### (Removal of solvent)

As methods for removing the solvent contained in the fluorinated copolymer composition, a method of bringing the fluorinated copolymer composition into contact with a medium having compatibility with the above solvent and having low solubility of the fluorinated copolymer (A) and the fluorinated copolymer (B), or a method of immersing the fluorinated copolymer composition in such a medium, may be mentioned. As such a medium, it is preferred to use, for example, a higher alcohol, acetone or a non-solvent of the fluorinated copolymer (A) and the fluorinated copolymer (B).

Among them, as the extraction medium, a non-solvent of the fluorinated copolymer (A) and the fluorinated copolymer (B) is more preferred. Alternatively, in a case where e.g. an extruder is used as a stirring mixer, the solvent may be removed by vacuum suction from a vent provided near the end of a cylinder of the extruder. Further, the solvent present in the fluorinated copolymer composition may be removed by e.g. reduced-pressure drying.

### (Molded Product)

The fluorinated copolymer composition of the present invention can be easily molded and formed into a desired molded product by various molding methods such as injection molding, extrusion molding, blow molding, compression molding, inflation molding and transfer molding. Molded products obtainable from the fluorinated copolymer composition of the present invention may be those in wide fields, such as pump casings, diaphragm valve casings, joints, packings, sealing materials, tubes, covered electric wires, sheets, films, linings, coatings, filaments, materials for membrane structures such as tent sheet, and printed boards.

### EXAMPLES

Now, the present invention will be specifically described with reference to Examples, but it should be understood that the technical scope of the present invention is by no means limited to such Examples. The melting points and the melt viscosities of the fluorinated copolymer (A) and the fluorinated copolymer (B), and the melt tensile strength of the fluorinated copolymer composition were measured by the following methods.

### [Melting point (°C)]

By means of a differential scanning calorimeter (DSC220CU, manufactured by Seiko Instruments Inc.), the melting point was obtained from the endothermic peak obtained by heating from room temperature to 300°C at a rate of 10°C/min under air atmosphere.

### [Measurement of melt viscosity (Pa·s)]

The melt viscosity was measured by means of a melt flowability measuring apparatus "CAPILOGRAPH", manufactured by Toyo Seiki Seisaku-sho, Ltd., having set an orifice with a diameter of 1 mm and a length of 10 mm at a temperature higher by 15°C than the melting point of the fluorinated copolymer. The melt viscosity was measured while the molten fluorinated copolymer (A) or (B) was extruded under a condition of a piston speed of 10 mm/min.

### [Melt tensile strength (mN), drawing speed (mm/min)]

Measurement was carried out by means of a melt flowability measuring apparatus "CAPILOGRAPH", manufactured by Toyo Seiki Seisaku-sho, Ltd., having set an orifice with a diameter of 1 mm and a length of 10 mm at a cylinder temperature higher by 15°C than the melting point. The melt tensile strength was measured while the composition of the fluorinated copolymer (A) and the fluorinated copolymer (B) was extruded under a condition of a piston speed of 5 mm/min. At the same time, the drawing speed was measured.

### [Example 1]

A closed vessel was charged with 100 g of isophorone (melting point: -8.1 °C, boiling point: 215.2°C) at 200°C, 1.0 g of a high molecular weight fluorinated copolymer (A1) (ETFE, E/TFE/(perfluorobutyl)ethylene=46/54/1.4 (molar ratio), melting point: 260°C, melt viscosity: 26,540 Pa·s (275°C)) and 9.0 g of a low molecular weight fluorinated copolymer (B1) (ETFE, ErTFE/(perfluorobutyl)ethylene=46/54/1.4 (molar ratio), melting point: 260°C, melt viscosity: 1,715 Pa·s (275°C)), followed by stirring by means of a stirring blade at a rotation speed of 300 rpm at 200°C for 2 hours. After the stirring, the fluorinated copolymers (A1) and (B1) and isophorone were mixed together, and a state of a transparent and uniform solution was obtained. The phase separation temperature of this solution was from 150 to 160°C.

In this solution, the content ratios were such that isophorone/(total amount of fluorinated copolymer (A1) and fluorinated copolymer (B1))=100/10 (mass ratio), and fluorinated copolymer (A1)/fluorinated copolymer (B1)=10/90 (mass ratio). Then, while the temperature was reduced to ordinary temperature, the fluorinated copolymer was precipitated, and the solution turned into a gel. The gelled fluorinated copolymer mixture D1 was immersed in 100 g of acetone at room temperature for 1 hour to extract isophorone contained in the gelled fluorinated copolymer mixture D1 into acetone. Then, the fluorinated copolymer mixture D1 was separated from the acetone/isophorone solution, followed by drying at 180°C to obtain a composition 1 of the fluorinated copolymer (B1) and the fluorinated copolymer (A1). The tests were carried out by using the obtained composition 1. The melt tensile strength was 23.8 mN. The drawing speed was 77.9 m/min.

### [Comparative Example 1]

LABO PLASTOMILL, manufactured by Toyo Seiki Seisaku-sho, Ltd., was charged with 4.0 g of the fluorinated copolymer (A1) and 36.0 g of the fluorinated copolymer (B1), which were used in Example 1, i.e. 40 g in total, followed by mixing for 100 revolutions in 10 minutes at 300°C to obtain a composition 2 of the fluorinated copolymer (A1) and the fluorinated copolymer (B1). In the composition 2, the content ratio was such that fluorinated copolymer (A1)/ftuorinated copolymer (B1)=10/90 (mass ratio). The tests were carried out by using the obtained composition 2. The melt tensile strength was 13.9 mN. The drawing speed was 37.5 m/min.

### [Example 2]

Hybrid Kneading Extruder, manufactured by Imoto Machinery Co., Ltd., as a stirring mixer was charged with 138 g of isophorone, 35.6 g of a high molecular weight fluorinated copolymer (A2) (ETFE, E/TFE/(perfluorobutyl)ethylene=40/60/3.3 (molar ratio), melting point: 225°C, melt viscosity: 2,475 Pa·s (240°C)) and 142.4 g of a low molecular weight fluorinated copolymer (B2) (ETFE,
E/TFE/(perfluorobutyl)ethylene=40/60/3.3 (molar ratio), melting point: 225°C, melt viscosity: 90 Pa·s (240°C)), followed by mixing by a stirring shaft rotating at a rotating speed of 100 rpm at 200°C for 1 hour. After the mixing, the fluorinated copolymer (A2), the fluorinated copolymer (B2) and isophorone were mixed together, and a state of a transparent and uniform solution was obtained. In the solution, the content ratios were such that isophorone/(total amount of the fluorinated copolymer (A2) and the fluorinated copolymer (B2))=43.7/56.3 (mass ratio), and fluorinated copolymer (A2)/fluorinated copolymer (B2)=20/80 (mass ratio).

Then, the solution was extruded from the extruder to obtain pelletized fluorinated copolymer mixture D2.

10 g of the obtained pelletized fluorinated copolymer mixture D2 was immersed in 100 g of acetone at room temperature for 1 hour to extract isophorone contained in the pelletized fluorinated copolymer mixture D2 into acetone. Then, the fluorinated copolymer mixture D2 was separated from the acetone/isophorone solution, followed by drying at 180°C to obtain a composition 3 of the fluorinated copolymer (A2) and the fluorinated copolymer (B2). The tests were carried out by using the obtained composition 3. The melt tensile strength was 6.5 mN. The drawing speed was 75.7 m/min. A film was formed by using the composition 3, whereby a film having no foreign substances such as hard spots was obtained.

### [Comparative Example 2]

LABO PLASTOMILL was charged with 8.0 g of the fluorinated copolymer (A2) and 32.0 g of the fluorinated copolymer (B2), i.e. 40 g in total, followed by mixing for 100 revolutions in 10 minutes at 300°C to obtain a composition 4 of the fluorinated copolymer (A2) and the fluorinated copolymer (B2). In the composition 4, the content ratio was such that fluorinated copolymer (A2)/fluorinated copolymer (B2)=20/80 (mass ratio). The tests were carried out by using the obtained composition 4. The melt tensile strength was 4.7 mN. The drawing speed was 22.9 m/min.

### INDUSTRIAL APPLICABILITY

The fluorinated copolymer composition of the present invention, which is a composition excellent in uniformity of a high molecular weight fluorinated copolymer and a low molecular weight fluorinated copolymer, has good melt moldability and high strength, whereby it is possible to produce extrusion molded products and injection molded products at a high productivity, and it is also suitable for producing fine extrusion molded products and injection molded products.

The entire disclosure of Japanese Patent Application No. 2010-094734 filed on April 16, 2010 including specification, claims and summary is incorporated herein by reference in its entirety.

## Claims

1. A process for producing a fluorinated copolymer composition, which comprises heating a mixture (D) comprising a high molecular weight fluorinated copolymer (A) having repeating units derived from tetrafluoroethylene and repeating units derived from ethylene and having a melt viscosity of from 1,500 to 35,000 Pa·s at a temperature higher by 15°C than the melting point, a fluorinated copolymer (B) having a molecular weight lower than the fluorinated copolymer (A), having repeating units derived from tetrafluoroethylene and repeating units derived from ethylene and having a melt viscosity of from 50 to 3,000 Pa·s at a temperature higher by 15°C than the melting point, said melt viscosity of the fluorinated copolymer (B) being at most 1/5 of the melt viscosity of the fluorinated copolymer (A) at a temperature higher by 15°C than the melting point of the fluorinated copolymer (A), and a solvent (C) capable of dissolving the fluorinated copolymer (A) and the fluorinated copolymer (B) at a temperature not higher than the melting points of the fluorinated copolymer (A) and the fluorinated copolymer (B), to at least a temperature where the fluorinated copolymer (A) and the fluorinated copolymer (B) are dissolved in the solvent (C) to obtain a solution state; and removing the solvent (C).

2. The process for producing a fluorinated copolymer composition according to Claim 1, wherein the content of the solvent (C) in the mixture (D) is at least an amount which is capable of dissolving the total amount of the fluorinated copolymer (A) and the fluorinated copolymer (B) in the mixture (D).

3. The process for producing a fluorinated copolymer composition according to Claim 1 or 2, wherein in the fluorinated copolymer (A), the molar ratio of (repeating units derived from tetrafluoroethylene)/(repeating units derived from ethylene) is from 90/10 to 30/70, and the total amount of the repeating units derived from tetrafluoroethylene and the repeating units derived from ethylene is more than 80 mol% based on the all repeating units in the fluorinated copolymer (A).

4. The process for producing a fluorinated copolymer composition according to any one of Claims 1 to 3, wherein in the fluorinated copolymer (B), the molar ratio of (repeating units derived from tetrafluoroethylene)/(repeating units derived from ethylene) is from 90/10 to 30/70, and the total amount of the repeating units derived from tetrafluoroethylene and the repeating units derived from ethylene is more than 80 mol% based on the all repeating units in the fluorinated copolymer (B).

5. The process for producing a fluorinated copolymer composition according to any one of Claims 1 to 4, wherein the solvent (C) is at least one member selected from the group consisting of a fluorinated aromatic compound, an aliphatic compound having at least one carbonyl group and a hydrofluoroalkyl ether.

6. The process for producing a fluorinated copolymer composition according to any one of Claims 1 to 5, wherein in the fluorinated copolymer composition, the mass ratio of fluorinated copolymer (A)/fluorinated copolymer (B) is from 1/1 to 1/15.

7. The process for producing a fluorinated copolymer composition according to any one of Claims 1 to 6, wherein the heating temperature of the mixture (D) is below the melting points of the fluorinated copolymer (A) and the fluorinated copolymer (B).

8. The process for producing a fluorinated copolymer composition according to any one of Claims 1 to 7, wherein the fluorinated copolymer (A), the fluorinated copolymer (B) and the solvent (C) are mixed to obtain the mixture (D), followed by dissolution at a temperature of from 40°C to 200°C.

9. A fluororesin molded product obtained by molding the fluorinated copolymer composition produced by the production process as defined in any one of Claims 1 to 8.

10. The fluororesin molded product according to Claim 9, which is a film.
